# NEW EUROPEAN PATENT SPECIFICATION

(11) **EP 3 059 277 B2**
(45) Date of publication and mention of the opposition decision: **30.03.2022**
(45) Mention of the grant of the patent: 10.04.2019
(21) Application number: 15156059.6
(22) Date of filing: 23.02.2015
(51) Int. Cl.: C08J 7/02, C08J 7/06, C23C 18/00, C23C 18/16, C25D 3/00, C25D 5/56, C23C 18/20, C25D 17/08

(54) **INHIBITOR COMPOSITION FOR RACKS WHEN USING CHROME FREE ETCHES IN A PLATING ON PLASTICS PROCESS**
Inhibitorzusammensetzung für Gestelle bei Verwendung chromfreier Ätzmittel in einem Plattierungsverfahren auf Kunststoffen
Composition d'inhibiteur pour racks lors de l'utilisation de gravures exemptes de chrome sur des processus plastiques

(43) Date of publication of application: 24.08.2016
(73) Proprietor: MacDermid Enthone Inc., Waterbury, CT 06702 (US)
(72) Inventor: Noffke, Frank, 42327 Wuppertal (DE); Königshofen, Andreas, 51371 Leverkusen (DE); Fuhrmann, Axel, 40764 Langenfeld (DE); Werner, Christoph, 40597 Düsseldorf (DE)
(74) Representative: Jenkins, Peter David

(56) References cited:
- EP-A1- 1 081 252
- EP-A1- 3 009 528
- WO-A1-2013/035876
- WO-A1-2013/135863
- WO-A1-2016/071598
- WO-A2-2013/135862
- CN-A- 104 005 028
- CN-A- 104 059 480
- CN-A- 104 059 495
- DE-A1-102004 005 868
- DE-C2- 19 510 855
- GB-A- 1 507 726
- US-A- 3 365 401
- US-A- 3 443 988
- US-A- 3 619 243
- US-A- 3 741 905
- US-A- 3 939 056
- US-A- 5 435 898
- US-A1- 2004 067 314
- US-A1- 2009 239 079

## Description

The present invention relates to a method for the inhibition of racks in a plating on plastics process where chrome free etches are utilized.

It is well-known in the art of surface technology to cover the surface of plastic parts in an electrochemical plating process for decorative or technical purposes with a metal like copper, nickel or chrome.

The parts which are to be plated with electrochemical methods are generally fixed and electrically contacted on racks. The contact consists of pure metal because the current flow is needed from the rack to each part to ensure the electroplating. The rest of the rack, however, is insulated, usually with an inert polymer, to prevent metal plating on the rest of the rack, i.e. on the areas of the rack not acting as contacts for the parts to be plated. Like that, often the surface of the rack insulation is made of a different polymer than the surface of the parts to be plated. Nevertheless, it is possible that the rack insulation polymer will be plated unintentionally. Typically such unintended rack plating causes reject and higher consumption costs. Therefore, either the plated metal on the insulation of the rack has to be removed after the plating process or the plating of metal on the insulated areas of the rack has to be inhibited. The first alternative is called stripping, but to strip the whole insulated area of the rack after the plating process is finished and the plated parts have been removed from the rack is very ineffective and thus uneconomic. The second alternative is therefore much more effective. When an etching of the parts to be plated comprising a chromic acid is used in the electrochemical plating process the insulated rack parts get inhibited by the chromic acid etching. The chromic acid acts on the insulated areas of the rack as a poison for the following electrochemical plating step and no further inhibition of the insulated rack areas is needed.

However, the use of chromic acid and chrome containing etching is widely considered as very harmful and chromic acid is included on the REACH list of substances of very high concern (SVHC). Therefore, its future use is seen to be costly due to high administrative and official authorization burdens and also as harmful to the environment. There are some alternative methods being developed for etching the plastic parts to be electrochemically plated avoiding the chrome acid etching agents.

For example, a recently known technique to etch the plastic parts to be electrochemically plated with a metal is the use of a manganese based etching composition where the manganese compound is combined with various sorts of strong acids.

However, using an alternative method for etching poses the problem that the inhibition of the insulated areas of the rack does no longer occur like in the chrome based etching methods. Thus, either the insulated areas of the rack are metal plated together with the plastic parts or some other method has to be found to achieve the inhibition of the rack areas in order to make the non-chrome etching in electrochemical plating on plastics work economically.

Among other aspects it is therefore an object of the invention to provide a method for inhibition of insulated rack areas for such electrochemical plating on plastics processes where no chrome containing etching agents are utilized.

Surprisingly, it was found that the object of the invention is solved by a method according to independent claim 1.

By independent claim 1, a method utilizing an aqueous inhibition composition for the inhibition of electrochemical metal plating on insulated surfaces is provided, said inhibition composition comprising an inhibition agent which contains one or more nitrogen atoms and one or more sulfur atoms according to formula (I) and is a thiourea.

The aqueous inhibition composition used by the invention is capable to reliably inhibit the metal plating on polymeric insulation surface areas, for instance of racks for holding the parts to be electrochemically plated.

By the use of the aqueous inhibition composition the plating on plastics process can be enhanced due to avoidance of stripping procedures for the insulated areas of the rack after the plating. For the use of non-chromic etching solutions it is quintessential for an economic implementation of alternative and more environment friendly methods that an inhibition of the insulated rack areas can be provided in order to avoid the costs of readjusting the plating baths and stripping. On the background that statistically the insulated rack areas have a surface around double the size of surface of the parts to be plated it can be imagined that plating those rack areas and stripping them again after the plating process makes all non-chromic etching alternatives nearly impossible for an industrial approach as long as there is no solution for inhibiting the insulated rack areas from being plated along with the parts that are intended to be plated. Therefore, with the present invention of providing an inhibition composition for such plating on plastics methods utilizing non-chromic etching agents the general implementation on an industrial scale is greatly improved.

It was surprisingly found that by using an inhibition composition comprising an inhibition agent that contains at least one nitrogen atom and at least one sulfur atom in combination in the same compound the inhibition of the plating of the surface of the insulated rack areas can be achieved in an easy to operate and environment friendly way. It was found that with the composition the racks can be immersed in the inhibition composition before or even after they are loaded with the parts to be plated and before the etching step of the plating process is carried out. Such a simple handling can be easily included in existing plastics plating plants.

The inhibition agent of the present composition can be chosen from a wide variety of compounds that contain one or more nitrogen atoms and in addition also one or more sulfur atoms and are thioureas.

According to an embodiment of the invention the inhibition agent comprised in the aqueous inhibition composition is at least one compound comprising a sulfur atom and a nitrogen atom according to formula I.

R₂N-C(S)Y (I)

wherein R is independently from each other hydrogen or a branched or unbranched C1 to C13 alkyl, alkenyl or aryl group, and Y is XR¹, NR²₂ or N(H)NR³₂ where X is O or S, and R¹, R², R³ is independently from each other hydrogen, an alkali metal or a branched or unbranched C₁ to C₁₃ alkyl, alkenyl or aryl group, wherein the compounds are thioureas.

According to the invention, the inhibition agent is selected from the group of thioureas.

The thiourea compounds which are utilized in the present invention may be characterized by the formula:

[R₂N]₂CS (II)

wherein each R is independently from each other hydrogen or an alkyl, cycloalkyl, alkenyl or aryl group. The alkyl, cycloalkyl, alkenyl and aryl groups may contain up to ten or more carbon atoms and substituents such as hydroxy, amino and/or halogen groups. The alkyl and alkenyl groups may be straight chain or branched. The thioureas used in the present invention comprise either thiourea or the homologes, various art recognized derivatives, or analogs thereof. Examples of such thioureas include thiourea, 1,3-dimethyl-2-thiourea, 1,3-dibutyl-2-thiourea, 1,3-didecyl-2-thiourea, 1,3diethyl-2-thiourea, 1,1-diethyl-2-thiourea, 1,3-diheptyl-2-thiourea, 1,1-diphenyl-2thiourea, 1-ethyl-1-(1-naphthyl)-2thiourea, 1-ethyl-1-phenyl-2-thiourea, 1-ethyl-3- phenyl-2-thiourea, 1-phenyl-2-thiourea, 1,3-diphenyl-2-thiourea, 1,1,3,3-tetramethyl-2-thiourea, 1-allyl-2-thiourea, 3-allyl-1,1-diethyl-2-thiourea and 1-methyl-3-hydroxyethyl-2-thiourea, 2,4-dithiobiuret, 2,4, 6-trithiobiuret, alkoxy ethers of isothiourea, hydroxyethanolallylthiourea, n-allylthiourea, hydroxyethylthiourea etc.

According to another embodiment of the invention the inhibition composition has a pH-value of between 2 and 13. Accordingly, the inhibition agent can be comprised in the aqueous inhibition composition in a concentration to provide an adequate pH-value. In terms of the invention, the pH-value is measured as the real pH-value and not influenced by any measurement failure like e.g. the alkali failure occurring by measuring the pH-value of high alkali solutions using a glass electrode.

According to the invention, the inhibition agent is comprised in the composition in a concentration of between ≥ 1 g/l and ≤ 10 g/l.

According to another embodiment of the invention the inhibition composition may additionally comprise at least one buffering agent. The compounds which may be utilized as a buffering agent in a composition according to the present invention may be phosphates, hydrogenphosphates, borates, ethylenamines or adducts of ethyleneamines with strong acids like hydrochloric acid or sulfuric acid like for example ethanolamine, ethylendiamine, diethylentriamine, triethylenetetramine, or salts of carboxylic acids, like for example potassium formate, sodium acetate, sodium potassium tartrate, or ammonium citrate. Like that, in the production line the pH value of the composition can be stabilized to achieve a good long term performance life of the composition.

According to another embodiment of the invention, the inhibition composition may additionally comprise agents to increase the solubility of the inhibitor compound in the composition.

Such agents are well known in the art and can be chosen for example amongst such agents like co-solvents, co-solutes like hydrotropes, salt forming agents, precipitation inhibitors, complex builders, pH adjustors, and surfactants. Like that, a higher concentration of the inhibitor in the aqueous composition can be achieved resulting in a better efficiency of the inhibitor composition, like for example shorter dipping times or more effective inhibition due to better inhibitor load on the polymer rack areas.

According to another embodiment of the invention the inhibition composition may additionally comprise swelling agents for the polymer of the rack insulation.

Such agents are well known in the art and can, for example, be chosen from aromatic and aliphatic chlorinated solvents, aromatic hydrocarbons, glycol ethers, ketones, and aldehydes.

With the swelling of the insulating polymer of the rack a better absorption of the inhibitor compound can be achieved. Thus, the same effects as with the solubility enhancing agents can be realized.

According to another embodiment of the invention, the inhibition composition may be provided to a user in form of a ready mixed solution in water, preferably in de-ionized water. Alternatively, the components can be shipped as a concentrate to reduce the shipping costs.

The invention relates to a method for the inhibition of electrochemical metal plating on an insulated surface of a rack area as claimed by claim 1. Accordingly, a method for the inhibition of electrochemical metal plating on an insulated surface of a rack area is provided, said method comprising the step of contacting the insulated surface of the rack which should be inhibited from the following electrochemical metal plating process with an inhibition composition according to the invention.

The inventive method has the advantage that it is easy to implement in a known plating on plastics process. The best line for implementing the step of inhibition of the insulated areas of the racks is the line when the racks used previously for carrying the parts to be plated are disassembled and the plated parts have been removed. Then there is a stripping process of the racks which removes the metal plated at the not insulated connection areas of the racks. In this stripping process the step of inhibition of the insulated areas of the racks can be utilized as follows.

For example, a full stripping and pre-cleaning process of the racks according to the inventive method can comprise the following sequence of steps:
a) rack hook stripping step,
b) one or more rinsing steps,
c) inhibition step using the inhibition composition,
d) optionally one or more rinsing steps,
e) drying step,
f) rack assembly step with new parts to be plated,
g) acid or alkaline cleaning step, and
h) one or more rinsing steps.

In an alternative example, a full stripping and pre-cleaning process of the racks according to the inventive method can comprise the following sequence of steps:
a') rack hook stripping step,
b') one or more rinsing steps,
c') drying step,
d') rack assembly step with new parts to be plated,
e') acid or alkaline cleaning step,
f) inhibition step using the inhibition composition, and
g') optionally one or more rinsing steps.

In other words, according to one embodiment of the inventive method the step of contacting the surface with the inhibition composition is included in the process line of stripping the racks from the metal plated on the contacting areas of the racks in the previous run of electrochemically plating a metal on plastics parts. In this stripping process the inhibition step according to the invention can be carried out before or even after the rack assembly step where the new parts to be plated are put onto the rack. Like that, the implementation into existing processes is very versatile.

According to the alternative stripping and pre-cleaning process mentioned above it is also possible to combine the steps e') and f) into one process step, i.e. the acid or alkaline cleaning step can be carried out simultaneously with the inhibition step using the inhibition composition. Like that, the processes time can be kept very short with the inventive inhibition.

One example of a known process for a electrochemical metal plating on plastics method the would be carried out subsequently to the stripping process can be summed up as follows:
I) etching step,
II) one or more rinsing steps,
III) neutralizing step,
IV) HCl dipping step,
V) Palladium activation step,
VI) one or more rinsing steps,
VII) accelerator or conductivity step,
VIII) one or more rinsing steps,
IX) electroless nickel or copper plating step or optionally electrolytical copper or nickel deposition step, and
X) optionally application step of final metal layer or alloy.

In the etching step I) alternatives to the known chrome-acid etching agents can be used. One example of such alternatives is a manganese based etching agent. Such etching agents are, for example described in US patent US 8603352, PCT patent application WO2013163316A2, or in PCT patent application WO2013112268A2.

In step X) the final metal or alloy layer applied can be chosen from such examples like copper, nickel, chrome, tin, zinc, iron, cobalt, silver, palladium, gold, and combinations thereof.

In an alternative sequence of steps including the inventive step of inhibition of the insulated areas of the racks a stripping sequence can comprise the following steps:
i) rack hook stripping step combined with inhibition step using the inhibition composition,
ii) one or more rinsing steps,
iii) drying step,
iv) rack assembly with new parts to be plated
v) acid or alkaline cleaning step, and
vi) one or more rinsing steps.

In other words, in another embodiment of the inventive method the step of contacting the surface with the inhibition composition is combined with the step of stripping the racks into a single process step. Like that, a shorter process time can be achieved.

In the inventive method the surface to be inhibited is brought into contact with said inhibition composition at a temperature in a range of between ≥ 40°C and ≤ 70°C.

It was found that as a general rule of thumb the inhibition effect is improved with higher temperatures of the inhibition composition in the inhibiting step. However, also at room temperature the inhibition of the insulated rack areas generally takes place with high efficiency even at sufficiently short immersion times in terms of implementation of the step in an industrial scale.

According to the inventive method, the surface to be inhibited is brought into contact with the inhibition composition for a time of between ≤ 10 min and ≥ 10sec.

The inventive method as well as the inhibition composition may be used to inhibit electrochemical metal plating of polymeric surfaces of the group consisting of PVC, Plastisol, polycarbonate, polyamide, polyurethane, PTFE, Halar^{®} (ECTFE, i.e. ethylene-chlorotrifluoroethylene copolymer), partly halogenated, especially partly fluorinated, polymers, and the like.

To bring the aqueous inhibition composition into contact with the surface which is to be inhibited from being subsequently metal plated the surface may be dipped into the inhibition composition or the composition may be sprayed onto the surface to be inhibited by appropriate means, like e.g. spraying nozzles. After contacting the surface may be rinsed by de-ionized water or tap water.

When the surface which is to be inhibited from being subsequently metal plated is brought into contact with the inhibition composition by dipping the surface into the composition the use of an agitating means may be encompassed for a more homogeneous distribution of the inhibiting agent.

The invention is additionally explained by the following examples while the inventive idea is not limited to these embodiments in any way.

### Examples

### Example 1 (inhibition agents B, F and H according to the present invention, remaining inhibition agents not according to the present invention)

An aqueous inhibition composition is provided by adding the following inhibition agents to 1000ml water. The effect of metallization onto the rack insulation by using an aqueous inhibition composition after the rack hook stripping step and before loading the plastic parts under different conditions is described in following table 1. As a reference the racks were immersed under different conditions into tap water, without adding an inhibition compound.

**Table 1:**

| Inhibition agent | Amount in [g/l] | Immersion time in [min] | Temperature in [°C] | pH | Inhibition of rack metallisation in [area%] | Metallization of plastic part in [area%] |
|---|---|---|---|---|---|---|
| reference | 0 | 1 | 25 | 7 | 0 | 100 |
| reference | 0 | 30 | 60 | 7 | 0 | 100 |
| reference | 0 | 30 | 60 | 2 | 0 | 100 |
| reference | 0 | 30 | 60 | 12 | 0 | 100 |
| A | 1 | 10 | 25 | 6 | 30 | 100 |
| A | 10 | 10 | 25 | 6 | 100 | 100 |
| A | 1 | 10 | 70 | 6 | 100 | 100 |
| B | 1 | 10 | 25 | 8 | 75 | 100 |
| B | 1 | 30 | 25 | 8 | 100 | 100 |
| B | 1 | 10 | 50 | 8 | 100 | 100 |
| C | 1 | 5 | 60 | 4 | 100 | 100 |
| D | 40 | 1 | 40 | 3 | 100 | 100 |
| E | 1 | 5 | 70 | 6 | 100 | 100 |
| F | 5 | 5 | 70 | 8 | 100 | 100 |
| G | 1 | 5 | 70 | 9 | 100 | 100 |
| H | 1 | 5 | 70 | 7 | 100 | 100 |
| H | 0,1 | 5 | 70 | 7 | 90 | 100 |
| Wherein A = 2-(methylthio)-2-thiazoline; B = thiourea; C = 4-methylthiosemicarbazide; D = potassium thiocyanate; E = 5-methyl-2-thiouracil; F = 1-diphenyl-2-thiourea; G = 5-methyl-2-thiohydantoine; H = HEAT (hydroxyethyl-allylthiourea). | | | | | | |

### Example 2 (inhibition agents B, F and H according to the invention, remaining inhibition agents not according to the present invention)

An aqueous inhibition composition is provided by adding the following inhibition gents to 1000ml of pre cleaner. The effect of metallization onto the rack insulation by using such an aqueous inhibition composition after loading the plastic parts to be metallized under different conditions is described in following table 2. As reference the racks were immersed under different conditions into the same pre cleaner solution, without addition of the inhibition compound.

**Table 2:**

| Inhibition agent | Amount in [g/l] | Immersion time in [min] | Temperature in [°C] | pH | Inhibition of rack metallisation in [area%] | Metallization of plastic part in [area%] |
|---|---|---|---|---|---|---|
| reference | 0 | 2 | 25 | 10 | 0 | 100 |
| reference | 0 | 2 | 50 | 10 | 0 | 100 |
| A | 1 | 2 | 25 | 6 | 20 | 100 |
| A | 5 | 2 | 40 | 6 | 80 | 100 |
| A | 10 | 2 | 70 | 6 | 100 | 100 |
| B | 5 | 2 | 40 | 8 | 90 | 100 |
| B | 5 | 2 | 60 | 8 | 100 | 100 |
| C | 2 | 2 | 60 | 9 | 100 | 100 |
| D | 20 | 1 | 70 | 5 | 100 | 100 |
| E | 2 | 2 | 70 | 6 | 100 | 100 |
| F | 5 | 5 | 70 | 8 | 100 | 100 |
| G | 5 | 2 | 70 | 11 | 100 | 100 |
| H | 1 | 2 | 70 | 7 | 100 | 100 |
| H | 0,1 | 2 | 70 | 7 | 70 | 100 |
| Wherein A = 2-(methylthio)-2-thiazoline; B = thiourea; C = 4-methylthiosemicarbazide; D = potassium thiocyanate; E = 5-methyl-2-thiouracil; F = 1-diphenyl-2-thiourea; G = 5-methyl-2-thiohydantoine; H = HEAT (hydroxyethyl-allylthiourea). | | | | | | |

## Claims

1. A method for the inhibition of electrochemical metal plating on an insulated surface of a rack area, said method comprising the step of:
contacting the insulated surface of the rack area with an aqueous inhibition composition comprising an inhibition agent that is at least one according to formula I
R₂N-C(S)Y (I)
wherein R is independently from each other H or a branched or unbranched C₁ to C₁₃ alkyl, alkenyl or aryl group, and Y is XR ¹ , NR²₂ or N(H)NR³₂ where X is O or S, and R¹ , R² , R³ is independently from each other H, an alkali metal or a branched or unbranched C₁ to C₁₃ alkyl, alkenyl or aryl group, wherein the inhibition agent is a thiourea which is comprised in a concentration range of between ≥ 1 g/l and ≤ 10g/l, wherein the insulation on the insulated areas of the rack is a polymer of the group consisting of PVC, polycarbonate, polyamide, polyurethane, PTFE, ECTFE, partly halogenated, especially partly fluorinated, polymers; and
wherein the surface is brought into contact with said inhibition composition at a temperature in a range of between ≥ 40°C and ≤ 70°C and for a time of between ≤ 10 min and ≥ 10 sec.

2. The method according to claim 1, wherein the step of contacting the surface with the inhibition composition is included in the process line prior to the etch process step of a plating on plastic line.

3. The method according to claim 1 or 2, wherein the step of contacting the surface with the inhibition composition is combined with the step of stripping the racks into a single process step or wherein the step of contacting the surface with the inhibition composition is combined with the step of pre-cleaning into a single process step prior to the etch step.

## Patentansprüche

1. Verfahren zum Unterdrücken einer elektrochemischen Metallisierung auf einer isolierten Oberfläche eines Rahmenbereichs, wobei das Verfahren den Schritt aufweist:
Inkontaktbringen der isolierten Oberfläche des Rahmenbereichs mit einer wässerigen Inhibierungszusammensetzung, die ein Inhibierungsmittel enthält, das mindestens eine Komponente gemäß Formel I ist:
R₂N-C(S)Y (I)
wobei R unabhängig voneinander H oder eine verzweigte oder unverzweigte C₁- bis C₁₃-Alkyl-, Alkenyl- oder Arylgruppe ist und Y XR¹, NR²₂ oder N(H)NR³₂ ist, wobei X oder S ist, und wobei R¹, R² und R³ unabhängig voneinander H, ein Alkalimetall oder eine verzweigte oder unverzweigte Ci- bis C₁₃-Alkyl-, Alkenyl- oder Arylgruppe sind, wobei das Inhibierungsmittel ein Thioharnstoff ist, der in einem Konzentrationsbereich zwischen ≥ 1 g/l und ≤ 10 g/l enthalten ist, wobei die Isolierung an den isolierten Bereichen des Rahmens ein Polymer der Gruppe bestehend aus PVC, Polycarbonat, Polyamid, Polyurethan, PTFE, ECTFE, teilweise halogenierten, insbesondere teileweise fluorierten Polymeren ist und wobei die Oberfläche bei einer Temperatur in einem Bereich zwischen ≥ 40°C und ≤ 70°C und für eine Zeit zwischen ≤ 10 Minuten und ≥ 10 Sekunden mit der Inhibierungszusammensetzung in Kontakt gebracht wird.

2. Verfahren nach Anspruch 1, wobei der Schritt zum Inkontaktbringen der Oberfläche mit der Inhibierungszusammensetzung in der Prozesslinie vor dem Ätzprozessschritt einer Kunststoffgalvanisierungslinie vorgesehen ist.

3. Verfahren nach Anspruch 1 oder 2, wobei der Schritt zum Inkontaktbringen der Oberfläche mit der Inhibierungszusammensetzung mit dem Schritt zum Abstreifen der Rahmen in einem einzigen Verfahrensschritt kombiniert ist, oder wobei der Schritt zum Inkontaktbringen der Oberfläche mit der Inhibierungszusammensetzung mit einem Vorreinigungsschritt in einem einzelnen Verfahrensschritt vor dem Ätzschritt kombiniert ist.

## Revendications

1. Procédé destiné à l'inhibition d'un placage de métal électrochimique sur une surface isolée d'une zone de rack, ledit procédé comprenant l'étape :
de mise en contact de la surface isolée de la zone de rack avec une composition d'inhibition aqueuse comprenant un agent d'inhibition qui est au moins un agent selon la formule I
R₂N-C(S)Y (I)
où les R sont indépendamment les uns des autres un atome H ou un groupe alkyle, alcényle ou aryle en C₁ à C₁₃ ramifié ou non ramifié, et Y équivaut à XR¹, NR²₂ ou N(H)NR³₂, où X est un atome O ou S, et R¹, R², R³ sont indépendamment les uns des autres un atome H, un atome de métal alcalin ou un groupe alkyle, alcényle ou aryle en C₁ à C₁₃ ramifié ou non ramifié, où l'agent inhibiteur est une thiourée qui est comprise dans une plage de concentrations entre ≥1 g/l et ≤10 g/l, où l'isolation des zones isolées du rack est à base d'un polymère du groupe constitué de polymères de PVC, de polycarbonate, de polyamide, de polyuréthane, de PTFE, d'ECTFE partiellement halogénés, notamment, partiellement fluorés ; et où la surface est amenée en contact avec ladite composition d'inhibition à une température dans une plage entre ≥40 °C et ≤70 °C et pendant une durée entre ≤10 min et ≥10 s.

2. Procédé selon la revendication 1, dans lequel l'étape de mise en contact de la surface avec la composition d'inhibition est comprise dans la ligne de procédé avant l'étape du procédé de gravure d'un placage sur une ligne plastique.

3. Procédé selon la revendication 1 ou la revendication 2, dans lequel l'étape de mise en contact de la surface avec la composition d'inhibition est combinée avec l'étape de décapage des racks en une seule étape de procédé ou dans lequel l'étape de mise en contact de la surface avec la composition d'inhibition est combinée avec l'étape de pré-nettoyage en une seule étape de procédé avant l'étape de gravure.
